# EUROPEAN PATENT SPECIFICATION

(11) **EP 3 921 184 B1**
(45) Date of publication and mention of the grant of the patent: **14.01.2026**
(21) Application number: 20703300.2
(22) Date of filing: 31.01.2020
(51) Int. Cl.: B60C 1/00, C08K 3/04, C08K 3/36, C08K 5/20, C08L 7/00

(54) **COMPOUND FOR A TYRE CARCASS PORTION**
ZUSAMMENSETZUNG FÜR EIN TEIL EINER REIFENKARKASSE
COMPOSITION POUR UNE PORTION DE CARCASSE DE PNEUMATIQUE

(30) Priority: 05.02.2019 IT 201900001635
(43) Date of publication of application: 15.12.2021
(73) Proprietor: Bridgestone Europe NV/SA, 1930 Zaventem (BE)
(72) Inventor: SAIKI, Aya, 00128 Rome (IT); PRIVITERA, Davide, 00128 Rome (IT)
(74) Representative: Marchetti, Alessio
(86) International application number: PCT/IB2020/050798
(87) International publication number: WO 2020/161582

(56) References cited:
- US-A1- 2009 137 701
- US-A1- 2013 075 009
- US-A1- 2014 202 609
- US-A1- 2016 319 111

## Description

The invention relates to a compound for a tyre carcass portion.

A low rolling resistance and a high resistance to the propagation of cracks are among the features that are nowadays most important for a tyre to be sold in the market.

A greater resistance to the propagation of cracks necessarily translates into a greater duration of the tyre.

One of the possible solutions to improve the resistance to the propagation of cracks usually is that of increasing the quantity of filler, such as carbon black or silica, and/or increasing the surface area thereof.

These solutions, despite being capable of improving the resistance to the propagation of cracks, are however incompatible with other relevant features, first of all the rolling resistance. To this regard, it should be pointed out that a large part of the research carried out in the field of tyre manufacturing is constantly focused on finding solutions that can ensure a decrease in the rolling resistance, especially of tyres for passenger transportation.

For a more complete understanding of the problem that this solution is aimed at solving, it should be reminded that a decrease in the content of carbon black of the compound of the portions of the tyres, while encouraging an improvement in terms of rolling resistance, leads - however - to a worsening in terms of hardness and resistance to the propagation of cracks. us 2016/319111 discloses a tire tread comprising a composition based on at least: an elastomer matrix comprising a polyisoprene and an unsaturated thermoplastic styrene elastomer which represents at most 50% by weight of the elastomer matrix, said unsaturated thermoplastic styrene elastomer comprising at least one rigid styrene segment and at least one flexible isoprene segment, a reinforcing filler and a cross-linking system The filler can comprises silica and carbon black.

Therefore, there is the need to rely on a solution that is capable of ensuring an improvement both in terms of rolling resistance and in terms of resistance to the propagation of cracks of the tyre portions.

The inventors of this invention surprisingly found out that, by acting upon the features of the filler, it is possible to obtain tyre portions having an improvement both in terms of resistance to the propagation of cracks and in terms of rolling resistance.

The subject-matter of the invention is a rubber compound for tyre carcass portions comprising at least a polymer base with a cross-linkable unsaturated chain, a filler consisting of a mixture of carbon black and silica, and a vulcanization system; **said compound being characterized in that** said filler is present in a quantity ranging from 55 to 65 phr and in that said carbon black makes up 65 to 95 % by weight of said filler; said carbon black having a specific surface area ranging from 30 to 50 m²/gr and said silica having a specific surface area ranging from 240 to 260 m²/gr.

The surface areas were measured through nitrogen adsorption according to standard ASTM D6556.

Hereinafter the term "polymer base with a cross-linkable unsaturated chain" identifies any natural or synthetic non-cross-linked polymer capable of taking on all the chemical-physical and mechanical features which are typically assumed by elastomers following a cross-linking (vulcanization) with sulphur-based systems.

Hereinafter the term "vulcanization system" indicates an assembly of ingredients comprising at least sulphur and accelerator agents, which, in the preparation of the compound, are added in a final mixing step and fulfil the aim of supporting the vulcanization of the polymer base once the compound is subjected to a vulcanization temperature.

The carbon black preferably makes up 75 to 85 % by weight of the filler.

Said compound preferably comprises a quantity ranging from 0.2 to 2.0 phr of a dispersant agent belonging to the class of aromatic amides and having an unsaturation suited to interact with the polymer base with a cross-linkable unsaturated chain.

Said dispersant agent is preferably comprised in the compound in a quantity ranging from 0.5 to 1.5 phr.

Said dispersant agent preferably is (2Z)-4-[(4-aminophenyl)amino]-4-oxo-2-butenoic acid sodium salt.

Said polymer base with a cross-linkable unsaturated chain preferably consists of one single polymer; more preferably, said polymer is natural rubber.

A further subject-matter of the invention is a tyre portion manufactured with the compound according to the invention.

A further subject-matter of the invention is a tyre comprising a portion manufactured with the compound according to the invention.

Below are some explanatory and non-limiting examples.

Four compounds were produced, two of them being comparison compounds (A and B) and two of them being compounds according to the invention.

In particular, the first compound (compound A) is a first comparison example and is a standard compound used to produce a carcass portion. Compound A comprises, as filler, a carbon black with a surface area of 83.2 m²/gr, whereas it does not comprise any type of plasticizer. The second compound (Compound B) is another comparison example and is different from Compound A because it involves the use of a different carbon black having a surface area of 34 m²/gr (which falls within the requirements of the invention as set forth in the appended claims). The third compound (Compound C) is a compound according to the invention and is different from Compound B because the filler also consists of silica having a surface area of 250 m²/gr (which falls within the requirements of the invention as set forth in the appended claims). The fourth compound (Compound D) is a further compound according to the invention and is different from Compound C because it involves the addition of a dispersant agent fulfilling the requirements according to the invention. The fifth compound (Compound E) is a comparison example and differs from Compound D in that the silica used has a surface area of 160 m²/gr (which does not fall within the requirements of the invention as set forth in the appended claims). The sixth compound (Compound F) is a comparison example and differs from compound D in that the silica is used in an amount higher than that of the invention as set forth in the appended claims.

The compounds of the examples were prepared according to a standard procedure, which is not relevant for the purposes of the invention.

### - preparation of the compounds -

### (first mixing step)

The cross-linkable polymer base, the carbon black and, when provided, the dispersant agent were loaded into a mixer with tangential rotors and with an inner volume ranging from 230 to 270 litres before the beginning of the mixing, thus reaching a filling factor ranging from 66 to 72%.

The mixer was operated at a speed ranging from 40 to 60 revolutions/minute and the mixture resulting therefrom was removed after having reached a temperature ranging from 140 to 160°C.

### (second mixing step)

The mixture obtained from the preceding step was newly processed in a mixer operated at a speed ranging from 40 to 60 revolutions/minute and, subsequently, was removed after having reached a temperature ranging from 130 to 150°C.

### (final mixing step)

The vulcanization system was added to the mixture obtained from the preceding step, thus reaching a filling factor ranging from 63 to 67%.

The mixer was operated at a speed ranging from 20 to 40 revolutions/minute and the mixture resulting therefrom was removed after having reached a temperature ranging from 100 to 110°C.

Table I shows the compositions in phr of the six compounds described above.

**TABLE I**

| | A | B | C | D | E | F |
|---|---|---|---|---|---|---|
| NR | 100 | | | | | |
| CB* N326 | 60 | -- | -- | -- | -- | -- |
| CB** N660 | -- | 60 | 48 | 48 | 48 | 36 |
| SILICA* | -- | -- | 12 | 12 | -- | 24 |
| SILICA** | | | | | 12 | -- |
| Dispersant agent | -- | -- | -- | 1.0 | 1.0 | 1.0 |
| Sulphur | 2.0 | | | | | |
| Accelerators | 2.5 | | | | | |
| Antioxidants | 4.5 | | | | | |
| ZnO | 3.0 | | | | | |
| Stearic acid | 2.0 | | | | | |

NR is a 1,4-cis polyisoprene rubber of natural origin.

CB* is a carbon black identified with N326, whose surface area is 83.2 m²/gr.

CB** is a carbon black identified with N660, whose surface area is 34 m²/gr.

The acronyms N326 and N660 of the two types of carbon black refer to the classification according to standard ASTM D1765.

SILICA* is characterized by a surface area equal to 250 m²/gr.

SILICA** is characterized by a surface area equal to 160 m²/gr.

The compounds shown in Table I, once vulcanized, were subjected to measurements aimed at assessing the rolling resistance and the resistance to the propagation of cracks.

The rolling resistance values are tightly connected to the TanD values at 60°C (the smaller the TanD value at 60°C, the better the rolling resistance). These values were measured according to standard ISO 4664.

The values of propagation of cracks were obtained with tests according to standard 4664-1 at a temperature of - 40°C.

Table II shows the results of the tests mentioned above.

In order to more clearly show the advantages resulting from the invention, the rolling resistance values of Table II are indexed to the relative values of the comparison compound (Compound A).

In particular, the smaller is the value concerning the rolling resistance, the better is this feature; whereas, the greater is the value concerning the resistance to cracks, the better is this feature.

**TABLE II**

| | A | B | C | D | E | F |
|---|---|---|---|---|---|---|
| Rolling resistance | 100 | 76 | 72 | 62 | 80 | 76 |
| Resistance to the propagation of cracks | 100 | 88 | 106 | 106 | 90 | 100 |

According to the results shown in Table II, the solution according to the invention is capable of ensuring a simultaneous improvement both in terms of rolling resistance and in terms of resistance to the propagation of cracks. Indeed, the sole combination of carbon black and silica having given surface areas and according to a specific amount ratio, is able to lead to improvements both in terms of rolling resistance and in terms of resistance to the propagation of cracks.

In particular, it should be pointed out that the presence of the dispersant agent (compound D) allows the rolling resistance to be further improved, without because of this worsening the resistance to the propagation of cracks.

In addition, values of comparison compounds E and F show that if the requirements in terms of silica surface area and/or silica amount are not satisfied, the advantages in terms of rolling resistance and resistance to cracks propagation cannot be obtained.

## Claims

1. A rubber compound for tyre carcass portions comprising at least a polymer base with a cross-linkable unsaturated chain, a filler consisting of a mixture of carbon black and silica, and a vulcanization system; **said compound being characterized in that** said filler is present in a quantity ranging from 55 to 65 phr and **in that** said carbon black makes up 65 to 95 % by weight of said filler; said carbon black having a specific surface area ranging from 30 to 50 m²/gr and said silica having a specific surface area ranging from 240 to 260 m²/gr, wherein the surface areas are measured through nitrogen adsorption according to standard ASTM D6556.

2. A rubber compound according to claim 1, **characterized in that** the carbon black makes up 75 to 85 % by weight of the filler.

3. A rubber compound according to to claim 1 or 2, **characterized in that** it comprises a quantity ranging from 0.2 to 2.0 phr of a dispersant agent belonging to the class of aromatic amides and having an unsaturation suited to interact with the polymer base with a cross-linkable unsaturated chain.

4. A rubber compound according to one of the preceding claims, **characterized in that** it comprises a quantity ranging from 0.5 to 1.5 phr of a dispersant agent belonging to the class of aromatic amides and having an unsaturation suited to interact with the polymer base with a cross-linkable unsaturated chain.

5. A rubber compound according to claim 3 or 4, **characterized in that** said dispersant agent is (2Z)-4-[(4-aminophenyl)amino]-4-oxo-2-butenoic acid sodium salt.

6. A rubber compound according to one of the preceding claims, **characterized in that** said polymer base with a cross-linkable unsaturated chain consists of one single polymer.

7. A rubber compound according to claim 6, **characterized in that** said polymer base with a cross-linkable unsaturated chain is natural rubber.

8. A tyre portion produced with the rubber compound according to one of the preceding claims.

9. A tyre comprising a portion according to claim 8.

## Patentansprüche

1. Gummimischung für Reifenkarkassenabschnitte, umfassend mindestens eine Polymerbasis mit einer vernetzbaren ungesättigten Kette, einen Füllstoff, der aus einer Mischung aus Ruß und Kieselerde besteht, und ein Vulkanisationssystem; **wobei die Verbindung**
**dadurch gekennzeichnet ist, dass** der Füllstoff in einer Menge im Bereich von 55 bis 65 phr vorhanden ist und dass der Ruß 65 bis 95 Gewichts-% des Füllstoffs ausmacht; wobei der Ruß eine spezifische Oberfläche im Bereich von 30 bis 50 m²/gr aufweist und die Kieselerde eine spezifische Oberfläche im Bereich von 240 bis 260 m²/gr aufweist, wobei die Oberflächen durch Stickstoffadsorption gemäß Standard ASTM D6556 gemessen werden.

2. Gummimischung nach Anspruch 1, **dadurch gekennzeichnet, dass** der Ruß 75 bis 85 Gewichts-% des Füllstoffs ausmacht.

3. Gummimischung nach Anspruch 1 oder 2,
**dadurch gekennzeichnet, dass** sie eine Menge im Bereich von 0,2 bis 2,0 phr eines Dispergiermittels umfasst, das zu der Klasse der aromatischen Amide gehört und eine Ungesättigtheit aufweist, die geeignet ist, mit der Polymerbasis mit einer vernetzbaren ungesättigten Kette zu interagieren.

4. Gummimischung nach einem der vorstehenden Ansprüche,
**dadurch gekennzeichnet, dass** sie eine Menge im Bereich von 0,5 bis 1,5 phr eines Dispergiermittels umfasst, das zu der Klasse der aromatischen Amide gehört und eine Ungesättigtheit aufweist, die geeignet ist, mit der Polymerbasis mit einer vernetzbaren ungesättigten Kette zu interagieren.

5. Gummimischung nach Anspruch 3 oder 4,
**dadurch gekennzeichnet, dass** das Dispergiermittel (2Z)-4-[(4-Aminophenyl)amino]-4-oxo-2-butensäurenatriumsalz ist.

6. Gummimischung nach einem der vorstehenden Ansprüche,
**dadurch gekennzeichnet, dass** die Polymerbasis mit einer vernetzbaren ungesättigten Kette aus einem einzigen Polymer besteht.

7. Gummimischung nach Anspruch 6, **dadurch gekennzeichnet, dass** die Polymerbasis mit einer vernetzbaren ungesättigten Kette Naturkautschuk ist.

8. Reifenabschnitt, der mit der Gummimischung nach einem der vorstehenden Ansprüche gefertigt ist.

9. Reifen, umfassend einen Abschnitt nach Anspruch 8.

## Revendications

1. Composé de caoutchouc pour les parties de carcasse de pneumatique comprenant au moins une base polymère avec une chaîne insaturée réticulable, une charge constituée d'un mélange de noir de carbone et de silice, et un système de vulcanisation ; ledit composé étant **caractérisé en ce que** ladite charge est présente en une quantité allant de 55 à 65 phr et dans ledit noir de carbone représente 65 à 95 % en poids de la charge ; ledit noir de carbone a une surface spécifique comprise entre 30 et 50 m²/gr et ladite silice a une surface spécifique comprise entre 240 et 260 m²/gr, dans lequel les surfaces sont mesurées par adsorption d'azote conformément à la norme ASTM D6556.

2. Composé de caoutchouc selon la revendication 1, **caractérisé en ce que** le noir de carbone représente 75 à 85 % en poids de la charge.

3. Composé de caoutchouc selon la revendication 1 ou 2,
**caractérisé en ce qu'**il comprend une quantité allant de 0,2 à 2,0 phr d'un agent dispersant appartenant à la classe des amides aromatiques et ayant une insaturation apte à interagir avec la base polymère à chaîne insaturée réticulable.

4. Composé de caoutchouc selon l'une des revendications précédentes,
**caractérisé en ce qu'**il comprend une quantité allant de 0,5 à 1,5 phr d'un agent dispersant appartenant à la classe des amides aromatiques et ayant une insaturation apte à interagir avec la base polymère à chaîne insaturée réticulable.

5. Composé de caoutchouc selon la revendication 3 ou 4,
**caractérisé en ce que** ledit agent dispersant est le sel de sodium d'acide (2Z)-4-[(4-aminophényl)amino]-4-oxo-2-buténoïque.

6. Composé de caoutchouc selon l'une des revendications précédentes,
**caractérisé en ce que** ladite base polymère avec une chaîne insaturée réticulable est constituée d'un seul polymère.

7. Composé de caoutchouc selon la revendication 6, **caractérisé en ce que** ladite base polymère avec une chaîne insaturée réticulable est du caoutchouc naturel.

8. Partie de pneumatique fabriquée avec un composé de caoutchouc selon l'une des revendications précédentes.

9. Pneumatique comprenant une partie selon la revendication 8.
